# EUROPÄISCHE PATENTSCHRIFT

(11) **EP 2 812 591 B1**
(45) Veröffentlichungstag und Bekanntmachung des Hinweises auf die Patenterteilung: **22.04.2020**
(21) Anmeldenummer: 13713223.9
(22) Anmeldetag: 07.02.2013
(51) Int. Cl.: F16C 19/18, F16C 19/49, F16C 19/54, F16C 21/00

(54) **ANORDNUNG ZUR LAGERUNG GEGENEINANDER VERDREHBARER TEILE EINER ENERGIEANLAGE**
ARRANGEMENT FOR MOUNTING COUNTER-ROTATABLE PARTS OF AN ENERGY SYSTEM
ENSEMBLE DESTINÉ À SUPPORTER DES PIÈCES D'UNE INSTALLATION DE PRODUCTION D'ÉNERGIE POUVANT TOURNER LES UNES PAR RAPPORT AUX AUTRES

(30) Priorität: 07.02.2012 DE 102012002201; 07.03.2012 DE 102012004329
(43) Veröffentlichungstag der Anmeldung: 17.12.2014
(73) Patentinhaber: IMO Holding GmbH, 91350 Gremsdorf (DE)
(72) Erfinder: RUß, Erich, 91350 Gremsdorf (DE); FRANK, Hubertus, 91315 Hoechstadt a.d. Aisch (DE); DIETZ, Volker, 91315 Hoechstadt a.d. Aisch (DE)
(74) Vertreter: Schmidt, Steffen J.
(86) Internationale Anmeldenummer: PCT/IB2013/000154
(87) Internationale Veröffentlichungsnummer: WO 2013/117980

(56) Entgegenhaltungen:
- EP-A1- 1 741 940
- EP-A2- 1 239 171
- DE-A1-102007 052 383
- DE-U- 1 976 014
- US-A- 4 422 697
- US-A- 5 134 863
- US-A- 5 714 818
- US-A1- 2011 115 233

## Beschreibung

Die vorliegende Erfindung richtet sich auf eine Wälzlageranordnung, vorzugsweise Großwälzlager mit einem Durchmesser von 0,5 m oder mehr, zur Lagerung gegeneinander verdrehbarer Teile einer Energieanlage, insbesondere als Blattlager einer Windkraftanlage, mit wenigstens zwei konzentrisch zueinander sowie zumindest bereichsweise ineinander angeordneten, ringförmigen, gegeneinander verdrehbaren Elementen zum Anschluss an gegeneinander verdrehbaren Teilen der Energieanlage, wobei zwei gegeneinander verdrehbare Anschlusselemente durch einen Spalt voneinander getrennt sind und einander in radialer Richtung zumindest teilweise überlappen, wobei ferner im Bereich des Spaltes in radial überlappenden Bereichen der ringförmigen Anschlusselemente wenigstens zwei Reihen von Wälzkörpern vorgesehen sind, welche jeweils entlang von zwei einander zumindest bereichsweise in radialer Richtung überlappenden Laufbahnen abrollen, wobei eine oder mehrere Laufbahnen für Wälzkörper in radial überlappenden Abschnitten angeordnet sind, derart, dass der Tragwinkel, den die Verbindungslinie zwischen den Zentren der Berührungspunkte eines Wälzkörpers mit dessen beiden Laufbahnen gegenüber der Ringebene einschließt, gleich oder größer ist als 45°, so dass eine solche axiale Wälzlagerung zur Übertragung überwiegend axial wirkender Kraftanteile dient, und wobei mindestens eine weitere Lagerung zur Übertragung überwiegend radial wirkender Kraftanteile vorgesehen ist, deren Tragwinkel kleiner als 45° ist, vorzugsweise 25° oder weniger, insbesondere 10° oder weniger. Im Rahmen dieser Anlage werden die Begriffe Windkraftanlage und Windenergieanlage als gleichbedeutend verwendet und betreffen jeweils eine Anlage zur Gewinnung von nutzbarer Energie aus Wind.

Im Stand der Technik sind Großwälzlager bekannt mit zwei axial gegeneinander versetzten Reihen von Wälzkörpern mit einem Tragwinkel von 45° oder mehr, und mit einer weiteren, axial dazwischen angeordneten Reihe von Wälzkörpern mit einem Tragwinkel von weniger als 45°. Eine solche Anordnung erweist sich in der Praxis zwar als sehr stabil; jedoch ist die Montage eines Wälzlagers mit insgesamt wenigstens drei Reihen von Wälzkörpern nicht unproblematisch. Dies betrifft nicht nur den Aufwand für das Einfüllen der Wälzkörper, sondern insbesondere auch die Anforderungen an die Präzision der Bearbeitung der dafür notwendigen, üblicherweise direkt in die Anschlusselemente eingearbeiteten Laufbahnen.

Aus der DE 10 2007 052 383 A1 ist eine Wälzlageranordnung mit zwei konzentrisch zueinander sowie zumindest bereichsweise ineinander angeordneten ringförmigen Anschlusselementen zum Anschluss an je eines von zwei gegeneinander verdrehbaren Anlagenteilen bekannt. Die beiden Anschlusselemente, die einen Innenring und einen Außenring bilden, sind durch einen Spalt voneinander getrennt und überlappen dabei in radialer Richtung teilweise. Im Bereich des Spalts sind eine erste und eine zweite Reihe von Wälzkörpern vorgesehen. Die Wälzkörper dieser beiden Reihen rollen jeweils in radial überlappenden Laufbahnen mit konkavem Querschnitt ab, wobei der Tragwinkel, den die Verbindungslinie zwischen den Zentren der Berührungspunkte eines dieser Wälzkörper mit dessen beiden Laufbahnen gegenüber der Ringebene einschließt, gleich oder größer als 75° ist. Axial zwischen der ersten und der zweite Reihe von Wälzkörpern ist eine dritte Reihe Wälzkörper vorgesehen, wobei sich eine Laufbahn für diese dritte Reihe von Wälzkörpern am Grund einer nutförmigen Vertiefung in einer Mantelfläche des Innenrings befindet. Die dritte Wälzkörperreihe dient dazu, Radialkräfte zwischen den beiden Anschlusselementen zu übertragen bzw. dieselben gegenseitig zu zentrieren. Durch diese Gestaltung lässt sich selbst bei einem ungünstigen Belastungsfall, d. h. bei einer geringen Verdrehungsrate oder gar häufigem Stillstand einerseits und bei starken Axial-, Radial- und Kippmomentbelastungen andererseits eine hohe Betriebsdauer erzielen.

Aus der EP 1 239 171 A2 ist eine Großdrehlagerung mit Wälzkörpern zwischen einem ersten ringförmigen Lagerteil und einem relativ dazu um eine Lagerachse drehbaren zweiten ringförmigen Lagerteil bekannt. An den beiden Lagerteilen sind jeweils kreisförmig umlaufende Laufflächen vorgesehen, die sich jeweils zu Laufflächenpaaren für zwei Reihen von Wälzkörpern ergänzen. Diese beiden Reihen von Wälzkörpern dienen zur Übertragung von parallel zur Lagerachse gerichteten Druck- und Zugkräften. Zur Übertragung radialer Kräfte sind in einem Bereich zwischen den beiden Laufflächenpaaren Gleitlagerflächen ausgebildet.

Anordnungen zur Lagerung von gegeneinander verdrehbaren Teilen für den Einsatz in Blattlagern von Windkraft- oder Windenergieanlagen nach derzeitigem Stand der Technik sind beispielsweise in den Patentdokumenten EP 1 266 137 B1, EP 2 382 146 B1, EP 2372149 A1 sowie EP 2087249 B1 beschrieben.

Obgleich die dort beschriebenen Anordnungen zur Lagerung von gegeneinander verdrehbaren Teilen für den Einsatz in Blattlagern von Windkraft- oder Windenergieanlagen nach derzeitigem Stand der Technik die technische Aufgabe grundsätzlich erfüllen, existiert Verbesserungsbedarf vor Allem hinsichtlich einer Erhöhung der Lebensdauer von insbesondere als Blattlager eingesetzten Lageranordnungen, oder beispielsweise auch in ähnlich aufgebauten Wasserkraftanlagen, beispielsweise im Rahmen von Strömungskraftwerken. Unter Umständen wäre es wünschenswert, Wälzlager zu erschaffen, welche eine möglichst geringe Spaltaufweitung ermöglichen. Denn gerade bei stark belasteten Lagern sind die innerhalb eines Spaltes abrollenden Wälzkörper unter Druck elastisch verformbar und können dann ihre Aufgabe einer präzisen Ausrichtung und Positionierung der zu lagernden Teile aneinander nur bedingt erfüllen.

Aus den Nachteilen des beschriebenen Standes der Technik resultiert das die Erfindung initiierende Problem, eine gattungsgemäße Wälzlageranordnung derart weiterzubilden, dass optimale Stabilitätseigenschaften mit einer möglichst langen Lebensdauer und einem möglichst geringen Montageaufwand einhergehen.

Die Lösung dieses Problems gelingt dadurch, dass in die ringförmigen Anschlusselemente keine Laufbahnen für radiale Wälzlager eingearbeitet sind.

Dies lässt sich dadurch realisieren, dass beide Anschlussringe völlig frei von eingearbeiteten Laufbahnen für ein radiales Wälzlager sind.

Solchenfalls entfällt bei der Montage ein Arbeitsschritt, nämlich das Einarbeiten einer Laufbahn für ein radiales Wälzlager in eine Spaltfläche.

Die erfindungsgemäße Anordnung zur Lagerung von gegeneinander verdrehbaren Teilen einer Energieanlage ist überdies insbesondere als Wälzlageranordnung für den Einsatz in großen Windkraftanlagen, größer oder gleich 2 MW, oder bei Einsatz als Wälzlager mit einem Durchmesser von 0,5 m oder mehr, besonders vorteilhaft, da durch die erfindungsgemäße Anordnung größere Lasten aufnehmbar sind und die resultierende Aufweitung der Wälzkörper- oder Lagerringe geringer ausfällt. Der Abtrag der radialen Lasten wird erfindungsgemäß verbessert.

Es hat sich als günstig erwiesen, dass die radiale Überlappung zweier Anschlusselemente gleich oder größer ist als der Radius eines in dem radial überlappenden Bereich abrollenden Wälzkörpers. Dies erlaubt es, die Erfindung dahingehend weiterzubilden, dass sich jede in ein Anschlusselement eingearbeitete Laufbahn zumindest teilweise in einen radial überlappenden Bereich beider an den betreffenden Spalt angrenzenden Anschlusselemente erstreckt, insbesondere entlang einer radialen Erstreckung von der Größe des Radius des betreffenden Wälzkörpers oder mehr. Diese Maßnahme erlaubt den betroffenen Wälzkörpern, überwiegend axial wirkende Belastungen, nämlich Axialkräfte und Kippmomente, zu übertragen, was gerade bei langgestreckten Anschlusskonstruktionen wie Rotorblätter von Windkraftanlagen, aber auch Krantürme od. dgl., von Vorteil ist.

Weitere Vorteile ergeben sich daraus, dass sich jede querschnittlich konkave Laufbahn aller Wälzkörperreihen zumindest teilweise in einen radial überlappenden Bereich beider an den betreffenden Spalt angrenzenden Anschlusselemente erstreckt, insbesondere entlang einer radialen Erstreckung von der Größe des Radius des betreffenden Wälzkörpers oder mehr. Derartige Laufbahnen sind für kugelförmige Wälzkörper konzipiert. Dieselben sind im Hinblick auf die Schmiereigenschaften unproblematischer als bspw. Rollen, bei welchen der Schmierfilm leichter reißt.

Erfindungsgemäß ist weiterhin vorgesehen, dass in radial einander nicht überlappenden Bereichen eines Spaltes zwischen zwei Anschlusselementen keine querschnittlich konkav gewölbte Laufbahn für daran abrollende Wälzkörper in ein Anschlusselement eingearbeitet ist. Dort werden zumeist eher radiale Belastungen zu übertragen sein, welche im Allgemeinen geringer sind, so dass der herstellungstechnisch aufwändige Vorgang des Einarbeitens von konkaven Laufbahnen, insbesondere der zumeist notwendigen und mit Aufwand verbundene Härteprozess einer Radiallaufbahn, nicht erforderlich ist. Wesentlich einfacher hingegen ist beispielsweise das Herstellen einer radialen Nut, in welcher eine oder mehrere Gleit- oder Wälzkörperreihen laufen, ohne dass Flächen dieser radialen Nut aufwendig gehärtet werden müssen.

Ähnliche Vorteile lassen sich dadurch erzielen, dass in einem Abschnitt eines Spaltes zwischen zwei Reihen von Wälzkörper, welche innerhalb des betreffenden Spaltes jeweils entlang von zwei einander zumindest bereichsweise in radialer Richtung überlappenden Laufbahnen abrollen, keine querschnittlich konkav gewölbte Laufbahn für daran abrollende Wälzkörper vorgesehen ist.

Erfindungsgemäß ist in einem Abschnitt eines Spaltes zwischen zwei Reihen von Wälzkörpern, welche innerhalb des betreffenden Spaltes jeweils entlang von zwei einander zumindest bereichsweise in radialer Richtung überlappenden Laufbahnen abrollen, ein Gleitlager vorgesehen. Gleitlager haben einen weitaus einfacheren Aufbau als Wälzlager und vereinfachen daher die Montage nicht unerheblich. Andererseits ist die erhöhte Reibung bei vielen Anwendungsfällen mit mäßigen axialen Belastungen und/oder mit niedrigen Drehzahlen nur von untergeordneter Bedeutung.

Ferner entspricht es der weiteren Lehre der Erfindung, dass das in einem Abschnitt eines Spaltes zwischen zwei Reihen von Wälzkörpern, welche innerhalb des betreffenden Spaltes jeweils entlang von zwei einander zumindest bereichsweise in radialer Richtung überlappenden Laufbahnen abrollen, angeordnete Gleitlager einen Tragwinkel von 30° oder weniger aufweist, vorzugsweise einen Tragwinkel von 20° oder weniger, insbesondere einen Tragwinkel von 10° oder weniger. Solche reinen Radiallager sind gegenüber axialen Belastungen unempfindlich und haben daher keinen negativen Einfluss auf die Betriebsdauer der gesamten Lageranordnung.

Eine erfindungsgemäße Wälzlageranordnung ist dabei im Prinzip als eine ringförmige Baugruppe mit einem Mittelpunkt ausgestaltet, dem sogenannten (Kreis-) Mittelpunkt der Wälzlageranordnung, welcher gleichermaßen die Rotationsachse der durch die Wälzlageranordnung verdrehbaren Lagerringe darstellt. Die Laufbahnen, in welchen die Wälzkörper befindlich sind, haben stets definierten Abstand von diesem (Kreis-) Mittelpunkt oder dieser Rotationsachse. Die Wälzkörper zweier unterschiedlicher Laufbahnen können zueinander unterschiedliche Durchmesser aufweisen, während die Wälzkörper innerhalb derselben Laufbahn in der Regel stets gleiche Durchmesser und vorzugsweise gleiche Formgebung aufweisen.

In dieser Wälzlageranordnung sind mehrere Laufbahnen für Wälzkörper angeordnet, und zwar in radial überlappenden Abschnitten derart, dass der Tragwinkel, den die Verbindungslinie zwischen den Zentren der Berührungspunkte eines Wälzkörpers mit dessen beiden Laufbahnen gegenüber der Ringebene einschließt, größer oder gleich 45° ist. Die Erfindung weiterhin charakterisierend ist eine Gleitkörperreihe zur Lagerung vorrangig radial wirkender Kraftanteile, wobei diese eine Gleitkörperreihe keine eingearbeiteten Laufbahnen im herkömmlichen Sinne (vgl. hauptsächlich axial wirkende Wälzkörper) aufweist, sondern ohne Verwendung von gehärteten Laufbahnen gelagert ist.

Erfindungsgemäß ist die radiale Lagerung als wenigstens ein Gleitlager ausgeführt oder als wenigstens eine Gleitlager- oder Gleitelementereihe, welche vorrangig für die Lagerung radial wirkender Kraftahteile zuständig ist. Im Sinne der Erfindung ist diese Gleitkörperreihe in einer umlaufenden nutförmige Vertiefung eingebracht, welche zumindest im inneren Ring und optional im dazu korrespondierenden Ring ausgeführt ist. Diese nutförmige Vertiefung ist in der Regel kreisförmig umlaufend ausgeführt, ähnlich einer Einstichnut. Je nach Erfordernis kann der Boden dieser nutförmigen Vertiefung beziehungsweise dieses Einstichs einen gekrümmten Querschnitt aufweisen. Es hat sich in besonderen Fällen als vorteilhaft erwiesen, wenn dieser Nutgrund oder -boden querschnittlich konvex ausgeführt ist.

In mindestens einer derartigen umlaufenden Vertiefung kann beispielsweise ein Gleitring und/oder ein Gleitelement geführt sein.

Es ist ebenfalls im Sinne der Erfindung, dass in mindestens einem der gegeneinander verdrehbaren Lager- oder Anschlusselemente ein Laufkörper eingearbeitet ist, welcher mindestens ein etwa in dem Spalt positioniertes Gleitelement benachbart. Dabei kann auf der korrespondierenden Seite des gegeneinander verdrehbaren Lager- oder Anschlusselementes das soeben genannte Gleitelement durch mindestens ein auf der Gegenseite und in einer anderen Vertiefung vorhandenes elastischen Element radial gestützt oder aufgenommen werden.

Um positive Lagerungseigenschaften in vorwiegend radialer Richtung zu bewirken, braucht jenes elastische Element nur geringfügig elastischer zu sein als das umgebende Material des Lager- und Anschlusselementes oder des Gleitelementes.

In einer alternativen Ausprägung der Erfindung ist der Laufkörper und/oder das auf der Gegenseite vorhandene Element härter als das umgebende Material des jeweiligen Lager- und Anschlusselementes. Es ist sogar denkbar, dass beide Teile (Laufkörper und elastisches Element) von nahezu gleicher Härte sind, während das zwischen diesen beiden Teilen laufende Gleitelement ebenfalls eine andere Härte aufweist als das umgebende Material des Lager- und Anschlusselementes, jedoch ebenso von der Härte der beiden Teile (Laufkörper und elastisches Element) verschieden ist.

Grundsätzlich sind gemäß der vorliegenden Erfindung, die primär axial lastabtragenden Wälzkörper als kugelförmige Elemente ausgebildet. Diese übernehmen die Lagerung axial wirkender Kraftanteile. Hingegen wird die Lagerung vorrangig radial wirkender Kraftanteile beispielsweise durch dynamische Gleitreibung der gegeneinander verdrehbaren Lager- oder Anschlusselemente in radialer Richtung bewirkt. Dies kann so geschehen, indem einander berührende Lager- oder Anschlusselemente zumindest zeitweise in reibschlüssigen Eingriff mit im Lagerspalt angeordneten Kunststoffelementen und/oder Messingelementen und/oder Wälzlagerstahlelementen (beispielsweise 100Cr6) versetzt werden.

Diesen im Lagerspalt angeordneten Gleitlagerelemente werden hauptsächlich aus Ringen oder Elementen bestehen, etwa aus Messing, Wälzlagerstahl, 100Cr6, Kunststoff, oder auch aus einem anderen ziehhartem Material, gegebenenfalls aus einem Material mit Notlaufeigenschaften oder einem Materialverbund mit Notlaufeigenschaften. Die Härte dieser Materialien mag in der Regel zwar geringer sein als die Härte der primär axial lastabtragenden Wälzkörper, jedoch können auch die hauptsächlich in radialer Richtung lastabtragenden Elemente der Gleitlagerreihe(n) Härten von bis zu, alternativ etwas höher als, 50 HRC erreichen.

Die Lehre der Erfindung stellt dabei heraus, dass sich während des Betriebs der Wälzlageranordnung und während der Lagerung der vorrangig radial wirkenden Kraftanteile, die inneren und die äußeren Anschlusselemente einander zumindest zeitweise berühren können. Es können dabei dynamische Reibmomente auftreten. Dies ist beispielsweise der Fall, wenn Lastspitzen in radialer Richtung wirken, welche die gegeneinander verdrehbaren Teile der Wälzlageranordnung aufeinander zu bewegen, sodass sich der Spalt, zumindest zeitweise oder kurzzeitig, verengt oder sich die Breite dieses Lagerspaltes zeitweise auf den Wert Null reduziert.

Weiterhin als positiv im Sinne der Erfindung hat sich herausgestellt, wenn die in die Gleitlagerreihen eingebrachten Gleiteinlagen oder Gleitelemente oder Gleitringe oder Ringsegmente speziell behandelt sind, so dass insbesondere deren Gleitreibungskoeffizienten gehemmt oder verstärkt werden.

Um dies zu erreichen hat sich ein verstärkender Materialüberzug oder eine Beschichtung des oder der Elemente - oder des oder deren Anlaufflächen als besonders vorteilhaft herausgestellt. Ein die Gleitreibung verändernder Materialüberzug kann alternativ auf mindestens einen der gegeneinander verdrehbaren Lager- oder Anschlusselemente angebracht sein. In der Praxis kann dies eine Beschichtung darstellen.

Auch andere die Oberflächeneigenschaften verändernde Verfahren sind hier denkbar, beispielsweise das Gasnitrocarburieren (ein thermochemisches Verfahren zum Anreichern der Randschicht eines Werkstückes mit Stickstoff und Kohlenstoff. Somit entsteht eine Nitrierschicht, bestehend aus Verbindungsschicht und Diffusionsschicht. Im Gegensatz dazu wird beim Nitrieren lediglich Stickstoff eingelagert).

Den Sinn der oben genannten Oberflächenveränderung weiterführend ist es denkbar, das die in die Gleitlagerreihen eingebrachten Gleiteinlagen oder Gleitelemente oder Gleitringe oder Ringsegmente beispielsweise gehärtet, vergütet, nitriert, boriert, brüniert, einsatzgehärtet oder gasnitriert werden.

Die erfindungsgemäße Wälzlageranordnung weist neben den hauptsächlich axial wirkenden Wälzlagerreihen mindestens ein oder mehrere Gleitlager oder Gleitelementereihen auf, welche sich jeweils ringförmig um den (Kreis-) Mittelpunkt der Wälzlageranordnung herum erstrecken, insbesondere als geschlossener Ring mit dem Zweck des Abtrags hauptsächlich radial wirkender Lasten oder Lastmomente. Alternativ kann diese radiale Reihe als geschlossener Ring aus aneinander gelegten oder ineinander gefügten Einzelsegmenten bestehen. Dabei spielt die Positionierung dieses/dieser hauptsächlich radial wirkenden Gleitlagers oder Gleitelementereihe eine wichtige Rolle: Diese radiale Reihe ist in axialer Richtung zwischen mehreren Reihen der hauptsächlich axial wirkenden Wälzkörperreihen in den Spalt eingebracht.

Beispielsweise ist jedoch auch erfindungsgemäß denkbar, dass diese radiale Reihe als ein oberer Gleitkörperring und ein unterer Gleitkörperring in die Wälzlageranordnung eingebaut ist, und/ oder alternativ als ein mittig liegender Gleitkörperring eingebaut ist. Mehrere solcher radialen Gleitkörperreihen können in axialer Richtung zwischen den Wälzkörpern in den Spalt eingebracht sein.

Bezogen auf den überwiegend axialen Lastabtrag der erfindungsgemäßen Vorrichtung lässt sich vorteilhaft im Sinne der Erfindung herausstellen, dass mindestens eine der mehreren primär axial lastabtragenden Wälzkörperreihen in radial überlappenden Abschnitten so ausgestaltet ist, so dass der Tragwinkel, den die Verbindungslinie zwischen dem Zentrum der Berührungspunkte eines jeden kugelförmigen Wälzkörpers mit dessen Laufbahn gegenüber der Ringebene einschließt, größer oder gleich 45° ist, vorzugsweise größer ist als 70°, insbesondere größer ist als 85°.

Ferner weist die erfindungsgemäße Vorrichtung und Wälzlageranordnung stets obere und/oder untere Dichtungsanordnungen auf, welche den Spalt oder Lagerspalt abschließen.

Derartige Dichtungsanordnungen sind in der Regel ringförmig umlaufend angeordnet und reagieren auf eventuelle Dehnungen oder Stauchungen oder weitergehende Formveränderungen relativ flexibel, vorzugsweise kautschuk- oder gummiartig. In der Regel sind die Formveränderungen, welche eine solche Dichtung beispielsweise während des Betriebs erleidet, weitestgehend reversibel.

Besonderes Augenmerk sollte im Rahmen der erfindungsgemäßen Konstruktion insbesondere der oben bereits genannten nutförmigen Vertiefung zuteil werden: In mindestens einer derartigen, nutförmigen Vertiefung kann der dortige Nutboden oder -grund gekrümmt ausgeführt sein, und zwar so, dass die Krümmung gegenüber dem (Kreis-) Mittelpunkt der Wälzlageranordnung konvex ausgeführt ist. Es haben sich dabei insbesondere geringe Krümmungsradien als vorteilhaft erwiesen.

Zurück kommend auf die erfindungsgemäße Gleitlagerfunktion in radialer Richtung des Lastabtrags ist des Weiteren herauszustellen, dass insbesondere ein- oder mehrreihige Segmente oder Ringe aus Gleitlagerwerkstoff, beispielsweise Kunststoff, welcher ein- oder mehrseitig beschichtet ist oder welcher als ein Kunststoffband mit Stahl- oder Metallseele(n) ausgeführt sein kann, als Gleitlager gute Zwecke leisten.

Diesen Erfindungsgedanken weiterhin ausführend wird als vorteilhaft angesehen, wenn mindestens eine solche Gleitkörperreihe ausgeführt ist als ein- oder mehrreihige Segmente oder Ringe aus Kunststoff, alternativ aus faserverstärktem Kunststoff, vorzugsweise als Käfigband oder mehrere Käfigbänder, welche jeweils im Segment oder Ring eingebettete nichteisenmetall-, graphit-, stahl-, oder keramik--Kugeln oder -Körper aufnehmen. Mindestens eine dieser radial wirkenden Gleitkörperreihen kann alternativ ausgeführt sein als ein Nadellager-Käfigsegmentband oder Nadellagerring mit Kunststoffkäfig.

Bezüglich der Dimensionen und Abstände in der erfindungsgemäßen Anordnung oder Vorrichtung ist folgendes gegeben: Die Wälzlageranordnung weist beispielsweise in hauptsächlich axial wirkender Lastrichtung die genannten kugelförmigen Wälzkörper auf, welche voneinander unterschiedlich große Durchmesser besitzen können. Die Mittelpunkte dieser Wälzkörper einer ersten Laufbahn werden dabei jeweils in gleichem Abstand vom (Kreis-) Mittelpunkt der Wälzlageranordnung stehen, während die Mittelpunkte einer anderen, vorzugsweise axial unterhalb der ersten Laufbahn befindlichen, weiteren Laufbahn entweder den gleichen Abstand oder einen betragsmäßig anderen Abstand vom (Kreis-) Mittelpunkt der Wälzlageranordnung aufweisen können. Je nachdem gilt insbesondere: |A1 | = |A2| oder |A1 | ≠ |A2|.

Einen stark positiven Einsatz weist die erfindungsgemäße Wälzlageranordnung vorzugsweise als Großwälzlager zur Lagerung von Teilen einer Windkraftanlage auf. Eine erfindungsgemäße Wälzlageranordnung kann zu diesem Zweck zwischen Anschlussflächen mindestens zweier gegeneinander verdrehbarer Anlagenteile eingebaut sein.

Der Anwendungsfall des Blattlagers einer Windkraftanlage hat sich als ideal erwiesen. Dabei ist eine erfindungsgemäße Wälzlageranordnung zwischen einem Rotorblatt, der Windkraftanlage einerseits und der Rotornabe der Windkraftanlage andererseits eingebaut.

Dabei ist ein solches Blattlager zusammenfassend beschrieben als wenigstens zwei konzentrisch zueinander sowie zumindest bereichsweise ineinander angeordnet, ringförmig und gegeneinander verdrehbare Elemente aufweisend, welche zum Anschluss an gegeneinander verdrehbare Teile dienen, wobei je zwei gegeneinander verdrehbare Anschlusselemente durch einen Spalt voneinander getrennt sind und einander in radialer Richtung zumindest teilweise überlappen. Ferner sind im Bereich des Spaltes in radial überlappenden Bereichen der ringförmigen Anschlusselemente wenigstens zwei Reihen von Wälzkörpern vorgesehen, welche jeweils entlang von zwei einander zumindest bereichsweise in radialer Richtung überlappenden Laufbahnen abrollen.

Es ist dabei im weiteren Sinne der Erfindungslehre, dass entweder die in radial überlappenden Abschnitten angeordneten und hinsichtlich Lastabtragung hauptsächlich axial wirkenden Wälzkörper innerhalb ihrer Laufbahn als mindestens ein um den (Kreis-) Mittelpunkt der Wälzlageranordnung umlaufender einteiliger Wälzkörper-Ring ausgestaltet sind; und/oder dass mindestens eine Gleitkörperreihe vorhanden ist, die hinsichtlich der Lastabtragung hauptsächlich radial wirkt.

Gegebenenfalls werden auch bei Wälzkörper-Ring(en) oder Ring-Segment(en) oben genannte Verfahren zur Veränderung der Oberflächeneigenschaften, wie etwa das Beschichten, eingesetzt, oder auch beispielsweise das Härten, Vergüten, Nitrieren, Borieren, Brünieren, Einsatzhärten, Gasnitrieren oder es werden schlichtweg einteilige Wälzkörper-Ring(e) oder Ring-Segment(e) aus Kunststoff, alternativ aus faserverstärktem Kunststoff, eingesetzt.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt quer durch die Ringe eines (nicht von den Ansprüchen umfassten) Wälzlagers, beispielhaft aufzeigend ein Wälzlager welches durch vier in den Ecken einer Aussparung oder Nut befindliche Laufbahndrähte gelagert wird;
- Fig. 2: eine Ausführungsform der Erfindung in einer der Fig. 1 entsprechenden Darstellung, jedoch beispielhaft aufzeigend ein Gleitelement, welches zwischen Laufkörper und elastischem Element gelagert ist;
- Fig. 3: eine abgewandelte Ausführungsform in einer der Fig. 1 entsprechenden Darstellung, jedoch beispielhaft aufzeigend ein Wälzlager oder einen Ring, welcher in einer Vertiefung befindlich ist;
- Fig. 4: eine wiederum abgeänderte Ausführungsform in einer der Fig. 1 entsprechenden Darstellung, jedoch beispielhaft aufzeigend unterschiedlich große Wälzkörper, zwischen welchen sich ein oder mehrere Gleitringe befinden;
- Fig. 5: eine noch andere Ausführungsform in einer der Fig. 1 entsprechenden Darstellung, jedoch beispielhaft aufzeigend mehrere Gleitringe, welche radiale Lastanteile aufnehmen, wobei die Wälzlageranordnung zumindest in Teilen einen abgeschrägt verlaufenden Dichtungsspalt aufweist;
- Fig. 6: eine weitere Ausführungsform in einer der Fig. 5 entsprechenden Darstellung, jedoch beispielhaft aufzeigend mehrere Gleitringe, welche radiale Lastanteile aufnehmen, wobei die Wälzlageranordnung zumindest in Teilen einen horizontal verlaufenden Dichtungsspalt aufweist; sowie
- Fig. 7: beispielhaft eine weitere Ausführungsform, als einen Schnitt quer durch die Ringe, aufzeigend einen Gleitring oder ein Gleitelement, welches radiale Lastanteile aufnimmt, wobei Gleitring oder Gleitelement vertikal in der Wälzlageranordnung angeordnet ist;
- Fig. 8: eine abgewandelte Ausführungsform in einer der Fig. 7 entsprechenden Darstellung, jedoch beispielhaft aufzeigend einen Gleitring, welcher in einer (konvexen) nutförmigen Vertiefung befindlich ist, wobei der Gleitring rollende oder wälzende Elemente beinhaltet;
- Fig. 9: eine weitere abgewandelte Ausführungsform in einer der Fig. 7 entsprechenden Darstellung, jedoch beispielhaft aufzeigend ein Gleitelement oder einen Gleitring, welcher in einer (konvexen) nutförmigen Vertiefung befindlich ist, wobei Gleitring oder Gleitelement Einlagen, Seelen oder Faserverstärkungen beinhaltet;
- Fig. 10: eine abgewandelte Ausführungsform in einer der Fig. 8 entsprechenden Darstellung, jedoch beispielhaft aufzeigend einen Gleitring, welcher in einer nutförmigen Vertiefung mit einem horizontal ebenen Nutboden befindlich ist, wobei der Gleitring rollende oder wälzende Elemente beinhaltet;
- Fig. 11: eine abgewandelte Ausführungsform in einer der Fig. 7 entsprechenden Darstellung, beispielhaft aufzeigend einen Gleitring oder ein Gleitelement, welches radiale Lastanteile aufnimmt, wobei Gleitring oder Gleitelement als mit vertikal orientierten Nadellagerkomponenten versehen ist;

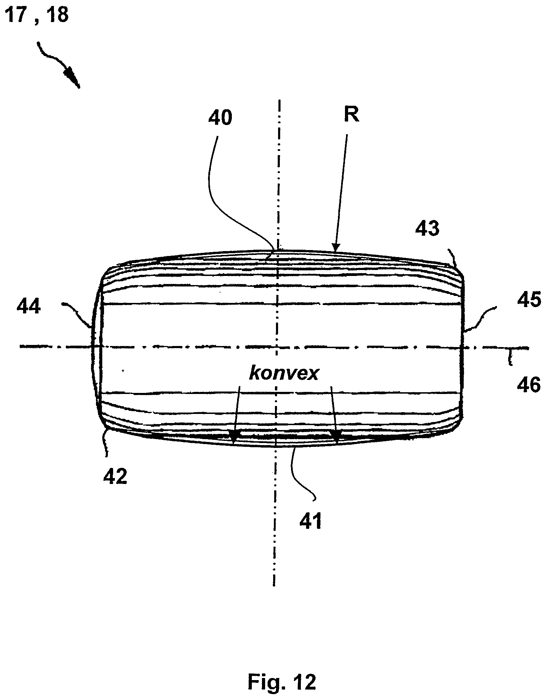

- Fig. 12: einen wälz- oder tonnenförmigen Wälzkörper, welcher in der erfindungsgemäßen Wälzlageranordnung in einer oder mehreren Bahnen zur Abtragung der hauptsächlich axialen Lasten Einsatz findet.
- Fig. 13: einen ringförmigen Wälzkörper als umlaufenden Ring, welcher in der erfindungsgemäßen Wälzlageranordnung entweder zur hauptsächlichen Abtragung der axialen Lasten und/ oder zur hauptsächlichen Abtragung der radialen Lasten Einsatz findet.
- Fig. 13a: einen ringförmigen Wälzkörper als umlaufenden Ring, bestehend aus mehreren Ring-Segmenten, welcher in der erfindungsgemäßen Wälzlageranordnung findet, entweder zur hauptsächlichen Abtragung der axialen Lasten und/ oder zur hauptsächlichen Abtragung der radialen Lasten.

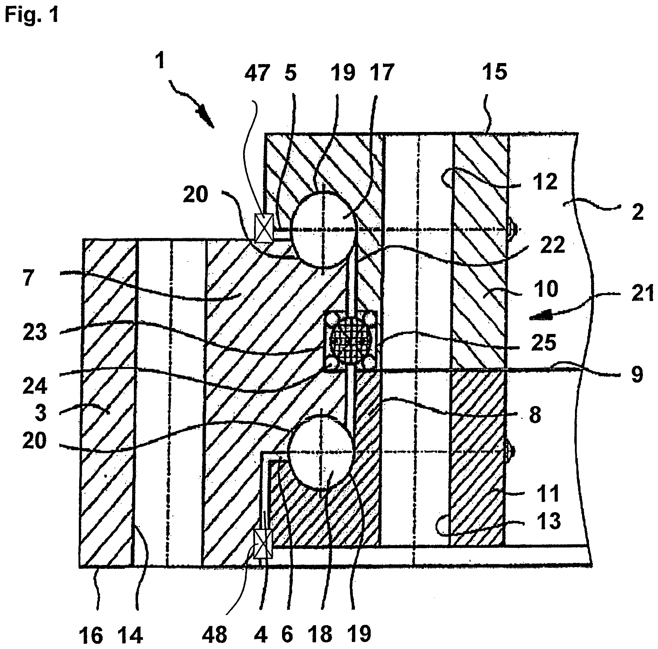

Der Querschnitt durch ein (nicht von den Ansprüchen umfasstes) Wälzlager 1 nach Fig. 1 lässt zwei ringförmige Anschlusselemente 2, 3 erkennen, welche radial ineinander angeordnet sind, einander zumindest teilweise in axialer Richtung überlappend. Eine solche Anordnung ist jedoch nicht auf zwei Anschlusselemente 2, 3 begrenzt; bspw. könnte radial innerhalb es nach Fig. 1 inneren Anschlusselements 2 noch ein drittes Anschlusselement vorgesehen sein, welches bspw. einen zu dem in Fig. 1 äußeren Anschlusselement 3 spiegelverkehrten Querschnitt aufweisen könnte und auch hinsichtlich der Spalt- und Laufbahngeometrie analog zu dem äußeren Anschlusselement 3 gestaltet sein könnte.

Die beiden Anschlusselemente 2, 3 aus Fig. 1 sind durch einen Spalt 4 voneinander getrennt. Dieser Spalt 4 folgt allerdings keinem rein zylindermantelförmigen Verlauf, sondern weist auch Abschnitte 5, 6 auf, wo der Spaltverlauf auch eine mehr oder weniger ausgeprägte Radialkomponente hat. Dort überlappen die beiden Anschlusselemente 2, 3 auch in radialer Richtung. Dies wird vorzugsweise dadurch bewirkt, dass eines der beiden Anschlusselemente 2, 3 - in Fig. 1 das radial äußere Anschlusselement (3), was jedoch nicht zwingend ist - einen rundum laufenden Bund 7 oder Flansch aufweist, der radial in Richtung zu dem jeweils anderen Anschlusselement 3, 2 vorspringt. Damit dort die beiden Anschlusselemente 2, 3 nicht aneinanderstreifen, ist das jeweils andere Anschlusselement 3, 2 - dem Bund 7 oder Flansch gegenüberliegend - mit einer rundum laufenden Nut 8 versehen. Da die radiale Erstreckung des Bundes 7 und auch die Tiefe der Nut 8 erheblich größer sind als die Breite des Spaltes 4, greift der Bund 7 oder Flansch in die Nut 8 ein. Diese Eintauchtiefe entspricht der Überlappung zwischen den beiden Anschlusselementen 2, 3. Um trotz dieser Überlappung das Lager 1 montieren zu können, ist das die Nut 8 aufweisende Anschlusselement 3, 2 entlang einer etwa ebenen Hauptfläche 9 unterteilt in einen oberen Ring 10 und einen unteren Ring 11.

Die beiden Ringe 10, 11 des geteilten Anschlusselements 3, 2 weisen jeweils kranzförmig verteilt angeordnete, miteinander fluchtende Durchgangsbohrungen 12, 13 auf zum Hindurchstecken von Befestigungsschrauben. Auch das jeweils nicht unterteilte Anschlusselement 2, 3 ist mit Befestigungsbohrungen 14 versehen, vorzugsweise ebenfalls mit Duchgangsbohrungen für Befestigungsschrauben.

Zwecks Vereinfachung des Anschlusses an die gegeneinander zu verdrehenden Anlagen- oder Maschinenteile weist jedes Anschlusselement 2, 3 eine gegenüber dem jeweils anderen Anschlusselement 3, 2 in axialer Richtung überstehende Anschlussfläche 15, 16 zur Anlage an dem zu fixierenden Anlagen- oder Maschinenteil auf.

Im Bereich der Überlappung, also zwischen jeweils zwei einander zugewandten Flanken des Bundes 7 einerseits und der Nut 8 andererseits, ist jeweils eine Reihe von Wälzkörpern 17, 18 vorgesehen. Hierbei handelt es sich vorzugsweise um kugelförmige Wälzkörper, welche entlang von Laufbahnen 19, 20 mit konkavem Querschnitt abrollen. Diese Laufbahnen 19, 20 sind bevorzugt direkt in den jeweiligen Grundkörper des betreffenden Anschlusselements eingearbeitet, insbesondere mittels spanabhebender Formgebung des betreffenden Anschlusselement-Grundkörpers.

Da die Laufbahnen 19, 20 querschnittlich nahezu den selben Krümmungsradius aufweisen wie die darauf entlang rollenden Wälzkörper 17, 18, schmiegen sie sich an die Oberfläche der Wälzkörper 17, 18 an. Diese querschnittlichen Schmiegebereiche umgeben den Großkreis der jeweiligen Kugeloberfläche jeweils auf 90° oder mehr. Da sich die Laufbahnen 19, 20 einer Wälzkörperreihe in radialer Richtung überlappen, haben diese kugelförmigen Wälzkörper 17, 18 jeweils einen Tragwinkel > 0°, vorzugsweise einen Tragwinkel von 45° oder mehr.

Bei einem Tragwinkel von etwa 45° ergeben sich bspw. zwei Vierpunktlager, welche sowohl Axialals auch Radiallasten übernehmen können. In diesem Fall sind zusätzliche Lagerungen mit einem Tragwinkel < 45° völlig entbehrlich, so dass in jenem Falle insgesamt zwei Wälzlagerreihen pro Spalt ausreichend wären, um alle Belastungsfälle aufnehmen zu können.

Ist der Tragwinkel > 45°, nimmt die radiale Belastbarkeit der Wälzlagerreihen 17, 18 ab und fällt bei einem Tragwinkel von 90° schließlich vollständig weg. In diesem Fall ist eine zusätzliche Radiallagerung 21 bzw. Lagerung mit radialer Tragkraft vorzusehen, insbesondere in demjenigen Bereich 22 des Spaltes 4, welcher durch die freie Stirnseite des Bundes 7 einerseits und den Grund der Nut 8 andererseits begrenzt wird, der also etwa eine zylindermantelförmige Gestalt aufweist.

Bei der (nicht von den Ansprüchen umfassten) Ausführungsform nach Fig. 1 handelt es sich hierbei um ein Wälzlager 23 mit vier Laufbahndrähten 24 in den Ecken von jeweils nutförmigen Vertiefungen 25 in der freien Stirnseite des Bundes 7 einerseits und innerhalb des Grundes der Nut 8 andererseits. Aufgrund dieser Anordnung hat diese Lagerung 23 die Qualität eines Vierpunktlagers, welches sowohl Axialkräfte, insbesondere aber auch Radialkräfte übertragen kann.

In mindestens einer derartigen umlaufenden Vertiefung 25 können beispielsweise auch einer oder mehrere Laufbahndrähte geführt werden, welche wiederum selbst eine radiale Wälzköperreihe, beispielsweise eine Kugelreihe, lagert. Dies ist in Fig. 1 beispielhaft dargestellt. Die Lagerung dieser hauptsächlich radial wirkenden Kugelreihe 23 geschieht ebenfalls nicht konventionell über eingearbeitete Laufbahnen, sondern indem mehrere, insbesondere vier, lagernde Laufbahndrähte 24 in den Ecken einer quadratischen Aussparung der zu liegen kommen, in deren Mitte sich das Wälzlager 23, beispielsweise die Kugelreihe, befindet.

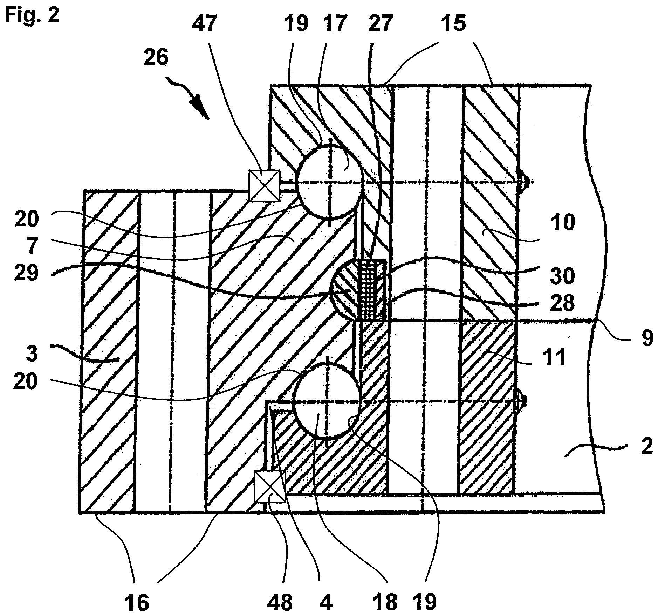

Die Lagerausführungsform 26 nach Fig. 2 unterscheidet sich von dem Lager 1 nur durch die Art der Radiallagerung 22. Hier ist ein Gleitlager vorgesehen mit einem Gleitelement 27, welches in einer nutförmigen Vertiefung 28 in dem etwa mittigen, zylindermantelförmigen Spaltabschnitt 22 aufgenommen ist. Dieses kann an einem separat in das jeweils andere Anschlusselement 2, 3 eingelegten Lauf körper 29 entlang gleiten und ggf. in seinem rückwärtigen Bereich durch ein elastisches Element 30 abgefedert sein.

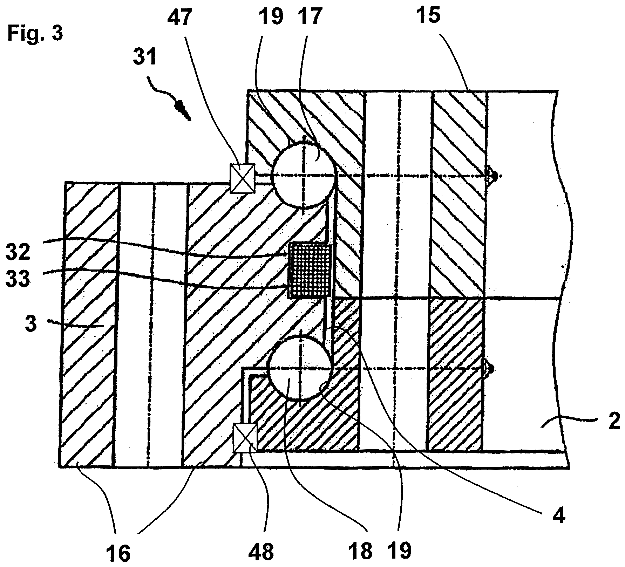

Bei der Lagerbauform 31 nach Fig. 3 läuft das dortige, in einer nutförmigen Vertiefung 32 im mittleren, zylindermantelförmigen Spaltabschnitt 22 aufgenommene Gleitelement 33 direkt an dem jeweils anderen Anschlusselement 2, 3 an.

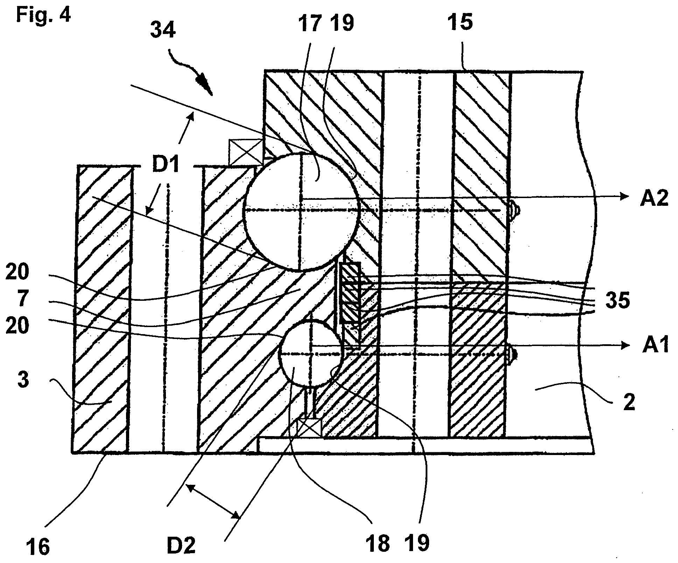

Ähnliches gilt für die Lagerbauform 34 nach Fig. 4. Auch dort gibt es nur einen einzelnen, in eine Nut eingelegten Gleitring 35, im Gegensatz zu Fig. 3 jedoch nicht in dem ungeteilten Anschlusselement 3, sondern hier in einem Ring des unterteilten Anschlusselements 2.

Derartige Gleitringe könne bspw. aus Metall bestehen, bspw. aus Messing, oder aus einem Kunststoff, und oder aus einem Material mit "Notlaufeigenschaften". Ferner können derartige Gleitringe in mehrere Segmente unterteilt sein, zwischen denen ggf. auch Spalte bestehen können. Ferner ist es möglich, dass die Gleitringe oder Gleitsegmente mit einer Beschichtung versehen sind.

Ferner zeigt Fig. 4, dass die Wälzkörper 17, 18 der beiden Wälzlagerreihen mit überwiegender axialer Tragkraft auch unterschiedlich groß sein können.

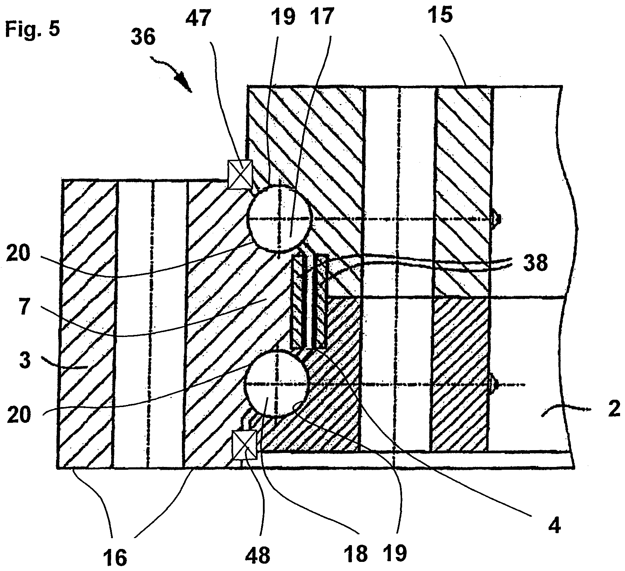

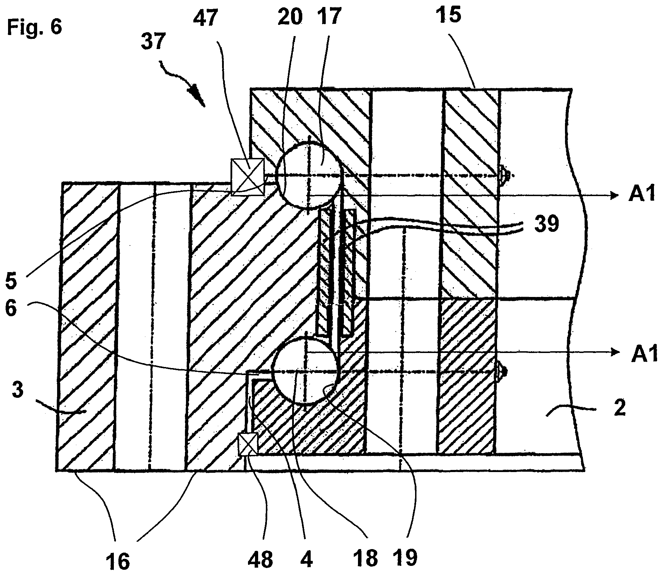

In den Fig. 5 und 6 sind zwei weitere Ausführungsformen eines erfindungsgemäßen Wälzlagers 36, 37 dargestellt. Dabei ist in dem mittleren, zylindermantelförmigen Spaltabschnitt 22 an beiden Anschlusselementen 2, 3 jeweils ein Gleitring 38, 39 eingelegt oder eine Reihe von Gleitsegmenten, welche aneinander entlang gleiten. Dabei können die Materialpaarungen dem Einzelfall entsprechend ausgewählt werden, bspw. zwei gleiche Materialien, oder aber auch ein härteres Material, welches an einem weicheren Material entlang gleitet.

Die Ausführungsformen 36, 37 gemäß Fig. 5 und Fig. 6 unterscheiden sich ferner dadurch, dass im Bereich der radialen Überlappung der Spalt 4 bei der Ausführungsform 37 nach Fig. 6 jeweils einem rein radialen Verlauf folgt, also in einer Ebene liegt, während bei der Ausführungsform 36 aus Fig. 5 der Spalt 4 im Bereich der radialen Überlappung einem schrägen Querschnittsverlauf folgt, also eine kegelmantelförmige Gestalt aufweist, bspw. mit einem Öffnungswinkel des Kegels von etwa 90°, entsprechend einer Neigung des Spaltquerschnitts um etwa 45° gegenüber der Lagerhauptebene.

Wie in allen Ausführungsformen mit Ausnahme der Fig. 4 dargestellt ist, haben die Laufbahnen, auf welchen die Wälzkörper abrollen, stets einen definierten Abstand A1, A2 von diesem (Kreis-) Mittelpunkt K oder dieser Rotationsachse. Die Wälzkörper 17, 18 zweier unterschiedlicher Laufbahnen können jedoch auch zueinander unterschiedliche Durchmesser D1, D2 aufweisen, wie in Fig. 4 dargestellt, während die Wälzkörper innerhalb derselben Laufbahn in der Regel stets gleiche Durchmesser und vorzugsweise gleiche Formgebung aufweisen.

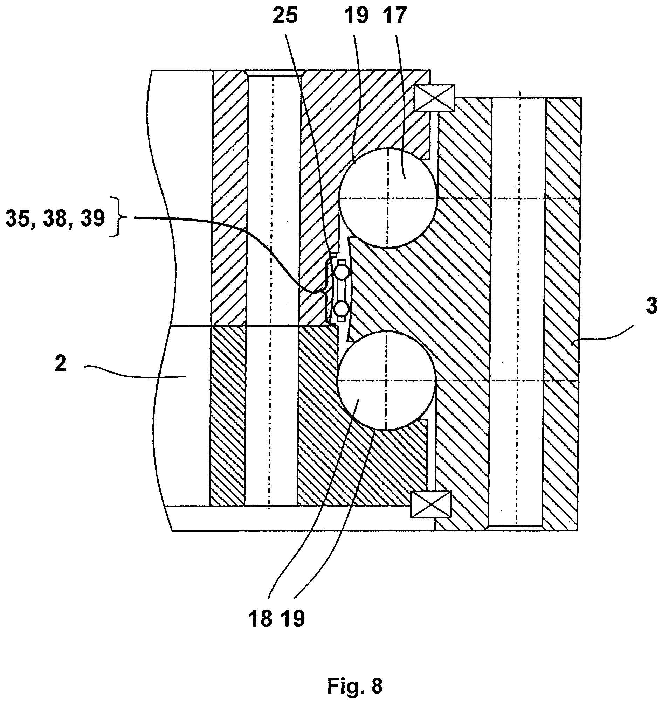

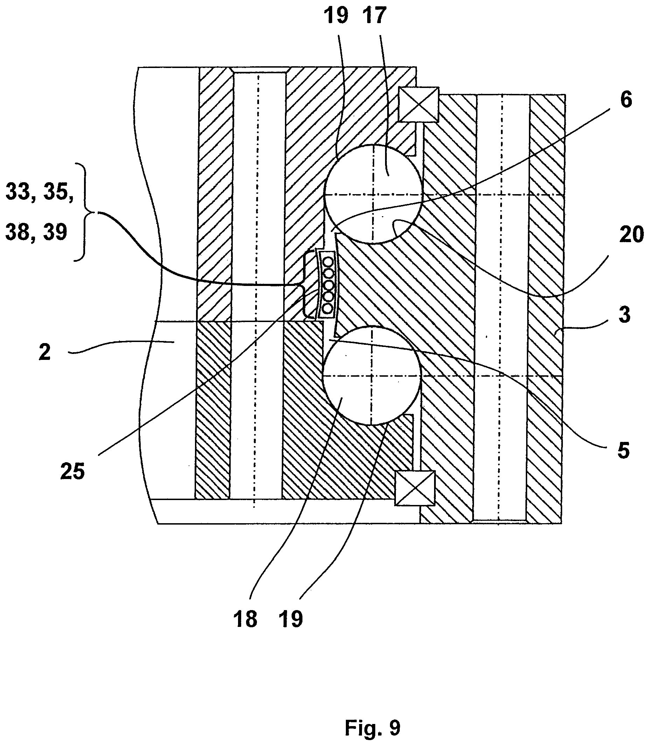

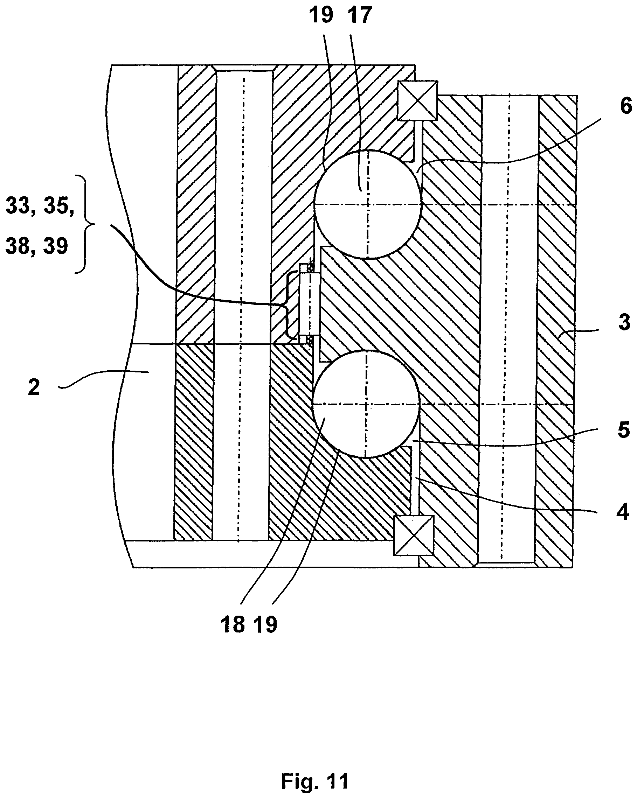

Die Erfindung empfiehlt, wie in Fig. 2 mit Fig. 11 ersichtlich, dass zusätzlich zu den Wälzkörperreihen 17, 18 mindestens eine Gleitkörperreihe 27, 33, 35, 38, 39 ausgeführt ist, welche vorrangig für die Lagerung radial wirkender Kraftanteile zuständig ist. Im Sinne der Erfindung ist diese Gleitkörperreihe in mindestens einer umlaufenden Vertiefung 25, 32 eingebracht, welche zumindest im inneren Ring und optional im dazu korrespondierenden Ring eingebracht ist. Diese nutförmige Vertiefung ist in der Regel kreisförmig umlaufend, ähnlich einer Einstichnut. Je nach Erfordernis kann der Boden dieser nutförmigen Vertiefung beziehungsweise dieses Einstichs gekrümmt ausgeführt sein, wie in den Fig. 8 und Fig. 9 beispielhaft dargestellt ist. Es hat sich in besonderen Fällen als vorteilhaft erwiesen, wenn dieser Boden querschnittlich konvex ausgeführt ist. In mindestens einer derartigen umlaufenden Vertiefung wird beispielsweise ein oder mehr Gleitring(e) und/ oder ein Gleitelement(e) 27, 33, 35, 38, 39 geführt.

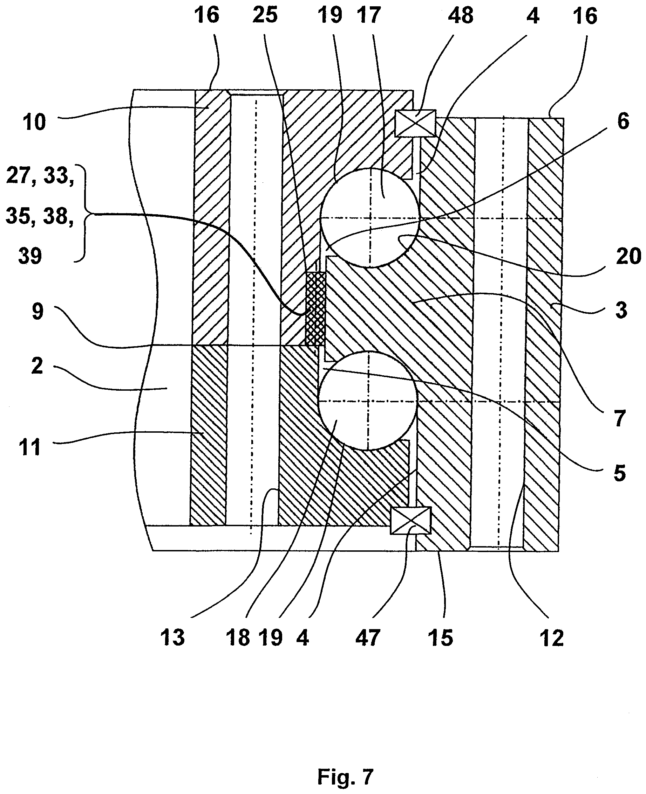

Fig. 7 zeigt beispielhaft eine weitere Ausführungsform der Wälzlageranordnung, als einen Schnitt quer durch die Ringe, aufzeigend exakt einen Gleitring bzw. ein Gleitelement 27, 33, 35, 38, 39, welches radiale Lastanteile aufnimmt, wobei Gleitring oder Gleitelement vertikal in der Wälzlageranordnung angeordnet ist;

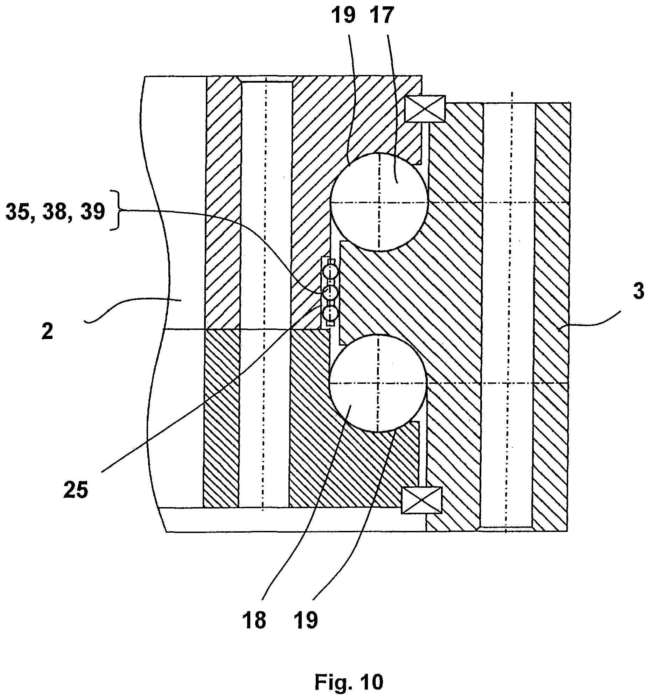

Fig. 8 zeigt eine abgewandelte Ausführungsform in einer der Fig. 7 entsprechenden Darstellung, jedoch beispielhaft aufzeigend einen Gleitring 35, 38, 39, welcher in einer (aus Richtung des (Kreis-) Mittelpunktes K konvexen) nutförmigen Vertiefung 25 befindlich ist, wobei dieser Gleitring beispielsweise rollende oder wälzende Elemente beinhaltet, beispielsweise Kugeln. Fig. 10 weist eine ähnliche Darstellung auf. Dargestellt ist jeweils ein Ring 35, 38, 39 aus Kunststoff, alternativ aus faserverstärktem Kunststoff, welche jeweils im Segment oder Ring eingebettete nichteisenmetall-, graphit-, stahl-, oder keramik- Körper aufnimmt. Dieser in Fig. 8 dargestellte Gleitring 35, 38, 39 kann aus Kunststoff bestehen. Dieser Kunststoff kann ein- oder mehrfach beschichtet sein. Die vom Ring 35, 38, 39 aufgenommenen Körper können kleine Gleitkörper sein, beispielsweise kleine Kugeln. Auch gleitende Elemente von geringen Abmessungen können angewendet werden, wenn diese vom Material des jeweiligen Gleitrings und/ oder der Gleitelementes 27, 33, 35, 38, 39 umschlossen werden.

Fig. 9 etwa zeigt eine weitere, abgewandelte Ausführungsform der Erfindung aufzeigend ein Gleitelement oder einen Gleitring, welcher in einer (konvexen) nutförmigen Vertiefung befindlich ist, wobei Gleitring oder Gleitelement 33, 35, 38, 29 Einlagen, Seelen oder Faserverstärkungen beinhaltet. Ergo ist das dortige Gleitelement oder der dortige Gleitring 33, 35, 38, 29 bestehend aus Stahl- oder Metallseelen oder aus Stahl- oder Metallsträngen, welche beispielsweise Kunststoff ummantelt sind. Auch dieser Kunststoffring kann ein- oder mehrfach beschichtet sein. Anstatt Kunststoff kann auch ein anderes Verbundmaterial eingesetzt werden.

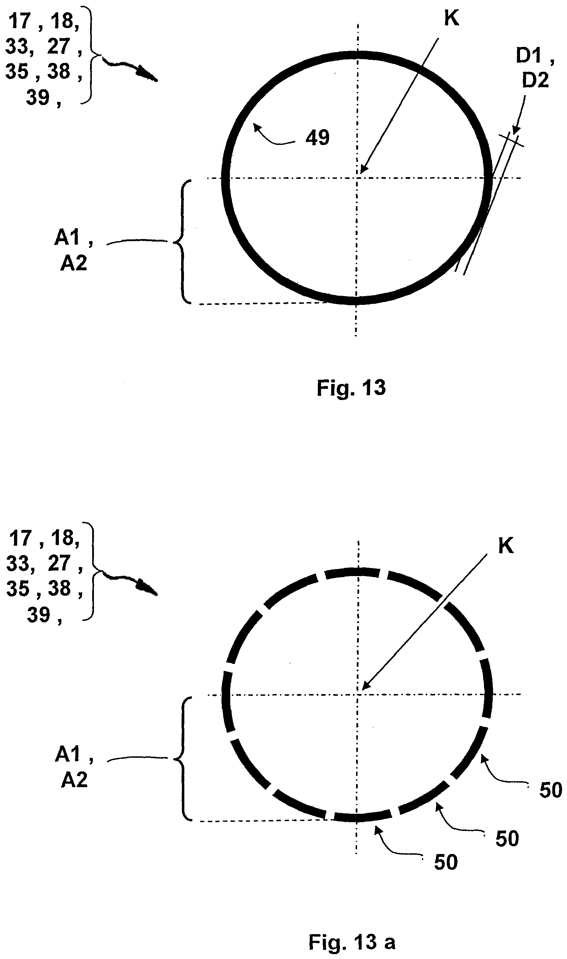

Die Fig. 13 und Fig. 13a weisen einen ringförmigen Wälzkörper als umlaufenden Ring 49 auf, bei Fig. 13a bestehend aus mehreren Ring-Segmenten 50, welcher in der erfindungsgemäßen Wälzlageranordnung Einsatz findet, zur hauptsächlichen Abtragung der radialen Lasten. Der Wälzkörper-Ring 49 ist beispielsweise ausgeführt als Stahlring. Alternativ, wie in Fig. 13 a ersichtlich, sind dessen einzelne RingSegmente 50 ausgeführt als Stahlring. Dieser Ring 49 oder dessen Segmente 50 werden vorzugsweise als gasnitrocarburierter Stahlring in der Wälzlageranordnung Anwendung finden. Alternativ kann dieser Ring 49 oder dessen Segmente 50 als Messing- oder Kupferring, oder als Kunststoff ring, ausgeführt werden, gegebenenfalls mit faserverstärkenden Materialeinlagen oder Seelen, oder mit Materialanteilen aus Graphit oder PTFE, wobei die Härte von Wälzkörper-Ring(en) 49 oder Ring-Segment(en) 50.

**Bezugszeichenliste:**

| | | | |
|---|---|---|---|
| 1 | Wälzlager | 27 | Gleitelement |
| 2 | Anschlusselement | 28 | Vertiefung |
| 3 | Anschlusselement | 29 | Laufkörper |
| 4 | Spalt; Lagerspalt | 30 | elastisches Element |
| 5 | Abschnitt | 31 | Wälzlager |
| 6 | Abschnitt | 32 | Vertiefung |
| 7 | Bund | 33 | Gleitelement |
| 8 | Nut | 34 | Wälzlager |
| 9 | Hauptfläche | 35 | Gleitring |
| 10 | oberes Lagerelement; Ring | 36 | Wälzlager |
| 11 | unteres Lagerelement; Ring | 37 | Wälzlager |
| 12 | Durchgangsbohrung | 38 | Gleitring |
| 13 | Durchgangsbohrung | 39 | Gleitring |
| 14 | Befestigungsbohrung | 40 | Wälzkörper |
| 15 | Anschlussfläche | 41 | Mantelfläche |
| 16 | Anschlussfläche | 42/ 43 | Übergang |
| 17 | Wälzkörper | 44/ 45 | Stirnseite |
| 18 | Wälzkörper | 46 | Rotationsachse |
| 19 | Laufbahn | R | Radius; Krümmung |
| 20 | Laufbahn | A1/ A2 | Abstand |
| 21 | Radiallagerung | D1/ D2 | Durchmesser |
| 22 | Bereich | K | (Kreis-)Mittelpunkt |
| 23 | Wälzlager | 47 | obere Dichtungsanordnung |
| 24 | Laufbahndraht | 48 | untere Dichtungsanordnung |
| 25 | nutförmige Vertiefung | 49 | Ring |
| 26 | Wälzlager | 50 | Ring-Segment |

## Patentansprüche

1. Wälzlageranordnung (1, 26, 31, 34, 36, 37) zur Lagerung von Teilen einer Energieanlage, mit wenigstens zwei konzentrisch zueinander sowie zumindest bereichsweise ineinander angeordneten, ringförmigen, gegeneinander verdrehbaren Elementen (2, 3) zum Anschluss an gegeneinander verdrehbaren Teilen der Energieanlage, wobei zwei gegeneinander verdrehbare Anschlusselemente (2, 3) durch einen Spalt (4) voneinander getrennt sind und einander in radialer Richtung zumindest teilweise überlappen, wobei ferner im Bereich des Spaltes (4) in radial überlappenden Bereichen der ringförmigen Anschlusselemente (2, 3) wenigstens zwei Reihen von kugelförmigen Wälzkörpern (17, 18) vorgesehen sind, welche jeweils entlang von zwei einander zumindest bereichsweise in radialer Richtung überlappenden Laufbahnen (19, 20) mit konkavem Querschnitt abrollen, wobei mehrere Laufbahnen (19, 20) für die kugelförmigen Wälzkörper (17, 18) in radial überlappenden Abschnitten (5, 6) angeordnet sind, derart, dass der Trag- oder Kontaktwinkel, den die Verbindungslinie zwischen den Zentren der Berührungspunkte eines Wälzkörpers (17, 18) mit dessen beiden Laufbahnen gegenüber der Ringebene einschließt, gleich oder größer ist als 45°, so dass eine solche axiale Wälzlagerung zur Übertragung überwiegend axial wirkender Kraftanteile dient, und wobei wenigstens eine weitere Lagerung zur Übertragung überwiegend radial wirkender Kraftanteile vorgesehen ist, deren resultierender Trag- oder Kontaktwinkel kleiner als 45° ist,
**dadurch gekennzeichnet, dass** in die ringförmigen Anschlusselemente (2, 3) keine Laufbahnen für radiale Wälzlager eingearbeitet sind, und wobei im Bereich des Spaltes (4) wenigstens zwei Reihen von kugelförmigen Wälzkörpern (17, 18) vorgesehen sind, sowie wenigstens ein Gleitlager, wobei
das Gleitlager ein in einer nutförmigen Vertiefung (32) eines inneren der ineinander angeordneten Anschlusselement (2, 3) aufgenommenes Gleitelement (33) umfasst, welches sich zwischen den zwei Reihen von kugelförmigen Wälzkörpern (17, 18) befindet, welche innerhalb des Spaltes (4) entlang von einander in radialer Richtung überlappenden Laufbahnen (19, 20) abrollen.

2. Wälzlageranordnung (1, 26, 31, 34, 36, 37) nach Anspruch 1, **dadurch**
**gekennzeichnet, dass** sich jede querschnittlich konkave Laufbahn (19, 20) aller Wälzkörperreihen (17, 18) zumindest teilweise in einen radial überlappenden Bereich (5, 6) beider an den betreffenden Spalt (4) angrenzenden Anschlusselemente (2, 3) erstreckt, insbesondere entlang einer radialen Erstreckung von der Größe des Radius des betreffenden Wälzkörpers (17, 18) oder mehr.

3. Wälzlageranordnung (1, 26, 31, 34, 36, 37) nach einem der Ansprüche 1 bis 2,
**dadurch gekennzeichnet, dass** in radial einander nicht überlappenden Bereichen (22) eines Spaltes (4) zwischen zwei Anschlusselementen (2, 3) keine querschnittlich konkav gewölbte Laufbahn für daran abrollende Wälzkörper in ein Anschlusselement (2, 3) eingearbeitet ist, und/oder dass in einem Abschnitt (22) eines Spaltes (4) zwischen zwei Reihen von Wälzkörpern (17, 18), welche innerhalb des betreffenden Spaltes (4) jeweils entlang von zwei einander zumindest bereichsweise in radialer Richtung überlappenden Laufbahnen (19, 20) abrollen, keine querschnittlich konkav gewölbte Laufbahn für daran abrollende Wälzkörper vorgesehen ist.

4. Wälzlageranordnung (1, 26, 36, 37, 31, 34) nach einem der vorhergehenden Ansprüche, **dadurch gekennzeichnet, dass** eine Gleitlager- oder Gleitelementereihe (33, 35, 38, 39) sich ringförmig um den Mittelpunkt (K) der Wälzlageranordnung (1, 26, 36, 37, 31, 34) erstreckt, insbesondere als geschlossener Ring, alternativ als geschlossener Ring aus fluchtend aneinander gelegten oder ineinander gefügten Ring-Segmenten.

5. Wälzlageranordnung (1, 26, 36, 37, 31, 34) nach einem der vorhergehenden Ansprüche, **dadurch gekennzeichnet, dass** die wenigstens eine weitere Lagerung zur Übertragung überwiegend radial wirkender Kraftanteile eine oder mehrere Reihen von Segmenten aus einem Gleitlagerwerkstoff umfasst, oder einen oder mehrere Ringe aus einem Gleitlagerwerkstoff, beispielsweise aus Kunststoff, welcher ein- oder mehrseitig beschichtet ist, oder welcher Stahl- oder Metallseelen ummantelt, wobei sich eine solche Gleitkörperreihe (23, 27, 33, 35, 38, 39) gegenüber den direkt benachbarten Abschlusselementen (2, 3) in oder entgegen dem Uhrzeigersinn verdrehen lässt und in einer umlaufenden, nutförmigen Vertiefung (25) im äußeren Ring (3) oder in dem dazu korrespondierenden Ring angeordnet ist, oder wobei ein solcher Gleitring (35, 38, 39) und/oder ein solches Gleitelement (27) in mindestens einer umlaufenden Vertiefung (25) geführt ist.

6. Wälzlageranordnung (1, 26, 36, 37, 31, 34) nach einem der vorhergehenden Ansprüche, **dadurch gekennzeichnet, dass** in mindestens einen der gegeneinander verdrehbaren Lager- oder Anschlusselemente (2, 3, 10, 11) ein Laufkörper (29) eingearbeitet ist, welcher mindestens ein etwa in dem Spalt (4) positioniertes Gleitelement (27) benachbart, wobei auf der korrespondierenden Seite des gegeneinander verdrehbaren Lager- oder Anschlusselementes (2, 3, 10, 11) dieses Gleitelement (27) durch mindestens ein in einer Vertiefung (28) vorhandenes elastischen Element (30) radial gestützt oder aufgenommen wird, wobei vorzugsweise das elastische Element (30) nur geringfügig elastischer ist als das umgebende Material des Lager- und Anschlusselementes (2, 3, 10, 11) oder des Gleitelementes (27).

7. Wälzlageranordnung (1, 26, 36, 37, 31, 34) nach Anspruch 6, **dadurch gekennzeichnet, dass** in einer alternativen Ausprägung der Laufkörper (29) und/oder das auf der Gegenseite vorhandene Element (30) härter sind als umgebende Material des jeweiligen Lagers und Anschlusselementes (2, 3, 10, 11), insbesondere so dass beide Teile (29, 30) von nahezu gleicher Härte sind, während das Gleitelement (27) ebenfalls eine andere Härte aufweist als das umgebende Material des Lager- und Anschlusselementes (2, 3, 10, 11).

8. Wälzlageranordnung (1, 26, 36, 37, 31, 34) nach einem der vorhergehenden Ansprüche, **dadurch gekennzeichnet, dass** die Lagerung vorrangig radial wirkender Kraftanteile Gleitreibung der gegeneinander verdrehbaren Lager- oder Anschlusselemente (2, 3, 10, 11) in radialer Richtung bewirkt, wobei zum Zwecke der Lagerung vorrangig radial wirkender Kraftanteile vorzugsweise innere und äußere, gegeneinander verdrehbaren Lager- oder Anschlusselemente (2, 3, 10, 11) einander zumindest zeitweise berühren, und zwar unter Ausprägung dynamischer Reibmomente, wobei insbesondere in Bereichen, in welchen dynamische Gleitreibung erfolgt, die radiale Erstreckung des Spaltes (4) zumindest zeitweise auf den Wert Null reduziert ist.

9. Wälzlageranordnung (1, 26, 36, 37, 31, 34) nach einem der vorhergehenden Ansprüche, **dadurch gekennzeichnet, dass** einander berührende Lager- oder Anschlusselemente (2, 3, 10, 11) zumindest zeitweise in Reibung mit in der Wälzlageranordnung (1, 26, 36, 37, 31, 34) angeordneten Messingelementen und Wälzlagerstahl und/oder Kunststoffelementen und Wälzlagerstahl versetzt werden.

10. Wälzlageranordnung (1, 26, 36, 37, 31, 34) nach einem der vorhergehenden Ansprüche, **dadurch gekennzeichnet, dass**, insbesondere zur Lagerung der vorrangig radial wirkender Kraftanteile Einlagen, oder Gleitelemente (27, 33) oder Ringe (38, 39) oder Gleitring-Segmente (35) aus Messing oder Stahl oder Kunststoff oder aus einem Material mit Notlaufeigenschaften in die Wälzlageranordnung (1, 26, 36, 37, 31, 34) eingebracht sind.

11. Wälzlageranordnung (1, 26, 36, 37, 31, 34) nach einem der vorhergehenden Ansprüche, **dadurch gekennzeichnet, dass** Gleiteinlagen oder Gleitelemente (27, 33) oder Gleitringe (38, 39) oder Gleitring-Segmente (35) mit einem die Gleitreibung verändernden, insbesondere die Gleitreibung hemmenden, alternativ die Gleitreibung verstärkenden, Materialüberzug überzogen oder beschichtet sind, wobei vorzugsweise ein die Gleitreibung verändernder Materialüberzug alternativ auf mindestens einem der gegeneinander verdrehbaren Lager- oder Anschlusselemente (2, 3, 10, 11) angebracht ist, insbesondere in Ausprägung einer Beschichtung.

12. Wälzlageranordnung (1, 26, 36, 37, 31, 34) nach einem der vorhergehenden Ansprüche, **dadurch gekennzeichnet, dass** wenigstens eine radiale Lagerung als ein- oder mehrreihige Segmente oder Ringe aus Kunststoff, alternativ aus faserverstärktem Kunststoff ausgebildet ist, vorzugsweise als Käfigband oder mehrere Käfigbänder, welche jeweils im Segment oder Ring eingebettete Nichteisenmetall-, Graphit-, Stahl-, oder Keramik-Körper aufnehmen.

## Claims

1. A roller bearing arrangement (1, 26, 31, 34, 36, 37) for supporting parts of an energy system with at least two elements (2, 3) which are arranged concentrically to each other as well as at least section-wise arranged within each other, annular and counter-rotatable for connection to counter-rotatable parts of the energy system, wherein two counter-rotatable connecting elements (2, 3) are separated from each other by a gap (4) and overlap each other in the radial direction at least partially, wherein furthermore at least two rows of ball-shaped rolling elements (17, 18) are provided in the area of a gap (4) in the radially overlapping areas of the annular connecting elements (2, 3), each of which rolling along two races (19, 20) with concave cross-section, which at least section-wise overlap in the radial direction, wherein several races (19, 20) for the ball-shaped rolling elements (17, 18) are arranged in radially overlapping sections (5, 6) in such a manner that the bearing or contact angle which is included by the connecting line between the centres of the contact points of a rolling element (17, 18) with its two races relative to the annular plane is equal or greater than 45° so that such an axial rolling bearing serves to transmit mainly axially acting force components, and wherein at least one additional bearing is provided for transmitting mainly radially action force components whose resulting bearing or contact angle is smaller than 45°,
**characterised in that** no races for radial roller bearings are machined into the connecting elements (2, 3), and wherein at least two rows of ball-shaped rolling elements (17, 18) are provided as well as at least one plain bearing, wherein the plain bearing comprises a sliding element (33) which is accommodated in a groove-shaped recess (32) of an inner one of the connecting elements (2, 3) which are arranged within each other, which is located between the two rows of ball-shaped rolling elements (17, 18) which roll off within the gap (4) along races (19, 20) which are overlapping each other in the axial direction.

2. The roller bearing arrangement (1, 26, 31, 34, 36, 37) according to Claim 1, **characterised in that** each cross-sectional concave race (19, 20) of all rows of rolling elements (17, 18) extends at least partially into a radially overlapping section (5, 6) of the two connecting elements (2, 3) adjacent to the respective gap (4), in particular along a radial extension of the size of the radius of the respective rolling element (17, 18).

3. The roller bearing arrangement (1, 26, 31, 34, 36, 37) according to any of Claims 1 to 2, **characterised in that** in radially non-overlapping sections (22) of a gap (4) between two connecting elements (2, 3) no cross-sectional concave curved race for rolling elements rolling off therefrom is machined into a connecting element (2, 3), and/or that in a section (22) of a gap (4) between two rows of rolling elements (17, 18) which roll off within the respective gap (4) along two races (19, 20) which at least section-wise overlap each other in the radial direction no cross-sectional concave curved race for rolling elements rolling off therefrom is provided.

4. The roller bearing arrangement (1, 26, 36, 37, 31, 34) according to any of the previous claims, **characterised in that** a row of plain bearings or a sliding elements (33, 35, 38, 39) extends ring-shaped about the centre (K) of the roller bearing arrangement (1, 26, 36, 37, 31, 34), in particular as a closed ring, alternatively as a closed ring of ring segments which are lying flush against each other or are fitted into each other.

5. The roller bearing arrangement (1, 26, 36, 37, 31, 34) according to any of the previous claims, **characterised in that** the at least one additional bearing for transmitting mainly radially action force components comprises one or several rows of segments of a plain bearing material or one or several rings of a plain bearing material, for example, of synthetic material, which is coated on one or more sides, or which sheathes steel or metal cores, wherein such a row of sliding elements (23, 27, 33, 35, 38, 39) may be rotated clockwise relative to the immediately neighbouring connecting elements (2, 3) or counter clockwise and is arranged in a circumferential groove-shaped recess (25) in the outer ring (3) or in the ring corresponding therewith, or wherein such a sliding ring (35, 38, 39) and/or such a sliding element (27) is guided in at least one circumferential recess (25).

6. The roller bearing arrangement (1, 26, 36, 37, 31, 34) according to any of the previous claims, **characterised in that** into at least one of the counter-rotatable bearing or connecting elements (2, 3, 10, 11) a running element (29) is incorporated which is adjacent to at least one sliding element (27) which is positioned for instance in the gap (4), wherein this sliding element (27) is radially supported or accommodated by at least one existing elastic element (30) on the corresponding side of the counter-rotatable bearing or connecting elements (2, 3, 10, 11), wherein the elastic element (30) is preferably only slightly more elastic than the surrounding material of the bearing or connecting element (2, 3, 10, 11) or of the sliding element (27).

7. The roller bearing arrangement (1, 26, 36, 37, 31, 34) according to Claim 6, **characterised in that** the running element (29) and/or the existing elastic element (30) on the opposite side of an alternative embodiment are harder than the surrounding material of the respective bearing and connecting element (2, 3, 10, 11), in particular that both parts (29, 30) exhibit nearly the same hardness, while the sliding element (27) also exhibits a hardness which is different from that of the surrounding material of the bearing and connecting element (2, 3, 10, 11).

8. The roller bearing arrangement (1, 26, 36, 37, 31, 34) according to any of the previous claims, **characterised in that** the support of predominantly radially acting force components causes sliding friction of the counter-rotatable bearing or connecting element (2, 3, 10, 11) in the radial direction, wherein for the purpose of supporting predominantly radially acting force components, preferably internal and external counter-rotatable bearing or connecting elements (2, 3, 10, 11) at least temporarily contact each other while forming dynamic friction moments, wherein in particular in areas where a dynamic sliding friction occurs, the radial extension of the gap (4) is at least temporarily reduced to zero.

9. The roller bearing arrangement (1, 26, 36, 37, 31, 34) according to any of the previous claims, **characterised in that** bearing or connecting elements (2, 3, 10, 11) contacting each other are at least temporarily put in friction with brass elements and roller bearing steel and/or synthetic material elements and roller bearing steel which are arranged in the roller bearing arrangement (1, 26, 36, 37, 31, 34).

10. The roller bearing arrangement (1, 26, 36, 37, 31, 34) according to any of the previous claims, **characterised in that** in particular for supporting the predominantly radially acting force components inserts or sliding elements (27, 33) or rings (38, 39) or sliding ring segments (35) made from brass or steel or synthetic material or from a material with dry running properties are installed in the roller bearing arrangement (1, 26, 36, 37, 31, 34).

11. The roller bearing arrangement (1, 26, 36, 37, 31, 34) according to any of the previous claims, **characterised in that** sliding inserts or sliding elements (27, 33) or sliding ring segments (35) covered or coated with a material coating which changes the sliding friction, in particular which inhibits the sliding friction, alternatively with a material coating which increases the sliding friction, wherein preferably a material coating which changes the sliding friction is alternatively applied on at least one of the counter-rotatable bearing or connecting elements (2, 3, 10, 11), in particular under forming a coating.

12. The roller bearing arrangement (1, 26, 36, 37, 31, 34) according to any of the previous claims, **characterised in that** at least one radial bearing is formed as one or multi-row segments or rings from synthetic material, alternatively from fiber-reinforced synthetic material, preferably as a cage band or as several cage bands each of which accommodating nonferrous metal, graphite, steel or ceramic elements which are embedded in the segment or ring.

## Revendications

1. Agencement de palier à roulement (1, 26, 31, 34, 36, 37) pour le support de pièces d'une installation d'énergie, comprenant au moins deux éléments annulaires (2, 3) disposés concentriquement l'un à l'autre et au moins dans certaines zones l'un dans l'autre et pouvant tourner l'un par rapport à l'autre, pour le raccordement à des pièces de l'installation d'énergie pouvant tourner l'une par rapport à l'autre, dans lequel deux éléments de raccordement (2, 3) pouvant tourner l'un par rapport à l'autre sont séparés l'un de l'autre par une fente (4) et se chevauchent au moins partiellement dans la direction radiale, dans lequel en outre, dans la zone de la fente (4), dans des zones de chevauchement radial des éléments de raccordement annulaires (2, 3), il est prévu au moins deux rangées de corps roulants sphériques (17, 18) qui roulent chacun le long de deux chemins de roulement (19, 20) de section transversale concave, qui se chevauchent au moins dans certaines zones dans la direction radiale, dans lequel plusieurs chemins de roulement (19, 20) pour les corps roulants sphériques (17, 18) sont disposés dans des parties (5, 6) se chevauchant radialement, de telle sorte que l'angle de portée ou de contact que la ligne de liaison entre les centres des points de contact d'un corps roulant (17, 18) avec ses deux chemins de roulement forme avec le plan de l'anneau est égal ou supérieur à 45°, de sorte qu'un tel palier à roulement axial sert à transmettre des composantes de force agissant principalement axialement, et dans lequel il est prévu au moins un autre palier pour transmettre des composantes de force agissant principalement radialement, dont l'angle de portée ou de contact résultant est inférieur à 45°,
**caractérisé en ce qu'**aucun chemin de roulement pour palier à roulement radial n'est formé dans les éléments de raccordement annulaires (2, 3), et dans lequel au moins deux rangées de corps roulants sphériques (17, 18) sont prévues dans la zone de la fente (4), ainsi qu'au moins un palier lisse, le palier lisse comprenant un élément glissant (33) reçu dans un évidement en forme de rainure (32) d'un élément de raccordement intérieur des éléments de raccordement (2, 3) disposés l'un dans l'autre, lequel élément glissant (33) se trouve entre les deux rangées de corps roulants sphériques (17, 18) qui roulent dans la fente (4) le long des chemins de roulement (19, 20) se chevauchant dans la direction radiale.

2. Agencement de palier à roulement (1, 26, 31, 34, 36, 37) selon la revendication 1, **caractérisé en ce que** chaque chemin de roulement (19, 20) de section transversale concave de toutes les rangées de corps roulants (17, 18) s'étend au moins partiellement dans une zone de chevauchement radial (5, 6) des deux éléments de raccordement (2, 3) adjacents à la fente (4) concernée, en particulier le long d'une extension radiale de la taille du rayon du corps roulant (17, 18) concerné ou plus.

3. Agencement de palier à roulement (1, 26, 31, 34, 36, 37) selon l'une des revendications 1 à 2, **caractérisé en ce que** dans les zones (22) d'une fente (4) entre deux éléments de raccordement (2, 3) qui ne se chevauchent pas radialement, aucun chemin de roulement de section transversale concave pour des corps roulants qui y roulent n'est formé dans un élément de raccordement (2, 3), et/ou que, dans une partie (22) d'une fente (4) entre deux rangées de corps roulants (17, 18) qui roulent dans la fente (4) concernée le long de deux chemins de roulement (19, 20) se chevauchant au moins dans certaines zones dans la direction radiale, il n'est pas prévu de chemin de roulement de section transversale concave pour des corps roulants qui y roulent.

4. Agencement de palier à roulement (1, 26, 36, 37, 31, 34) selon l'une des revendications précédentes, **caractérisé en ce qu'**une rangée de paliers lisses ou d'éléments glissants (33, 35, 38, 39) s'étend en forme d'anneau autour du point central (K) de l'agencement de palier à roulement (1, 26, 36, 37, 31, 34), en particulier sous la forme d'un anneau fermé, en alternative sous la forme d'un anneau fermé composé de segments d'anneau alignés les uns avec les autres ou emboîtés les uns dans les autres.

5. Agencement de palier à roulement (1, 26, 36, 37, 31, 34) selon l'une des revendications précédentes, **caractérisé en ce que** ledit au moins un autre palier pour la transmission de composantes de force agissant principalement radialement comprend une ou plusieurs rangées de segments constitués d'un matériau de palier lisse, ou un ou plusieurs anneaux constitués d'un matériau de palier lisse, par exemple en matière plastique, qui est revêtu sur une ou plusieurs faces, ou qui enrobe des noyaux en acier ou en métal, dans lequel une telle rangée de corps glissants (23, 27, 33, 35, 38, 39) peut tourner dans le sens des aiguilles d'une montre ou dans le sens inverse des aiguilles d'une montre par rapport aux éléments de raccordement (2, 3) directement adjacents et est disposée dans un évidement périphérique (25) en forme de rainure dans l'anneau extérieur (3) ou dans l'anneau correspondant à celle-ci, ou dans lequel un tel anneau glissant (35, 38, 39) et/ou un tel élément glissant (27) est guidé dans au moins un évidement périphérique (25).

6. Agencement de palier à roulement (1, 26, 36, 37, 31, 34) selon l'une des revendications précédentes, **caractérisé en ce qu'**un corps mobile (29) est formé dans au moins l'un des éléments de support ou de raccordement (2, 3, 10, 11) pouvant tourner l'un par rapport à l'autre, lequel est adjacent à au moins un élément glissant (27) positionné approximativement dans la fente (4), dans lequel, du côté correspondant de l'élément de palier ou de raccordement (2, 3, 10, 11) pouvant tourner par rapport à l'autre, cet élément glissant (27) est supporté ou reçu radialement par au moins un élément élastique (30) présent dans un évidement (28), l'élément élastique (30) n'étant de préférence que légèrement plus élastique que le matériau environnant de l'élément de support et de raccordement (2, 3, 10, 11) ou de l'élément glissant (27).

7. Agencement de palier à roulement (1, 26, 36, 37, 31, 34) selon la revendication 6, **caractérisé en ce que**, dans une variante de réalisation, le corps mobile (29) et/ou l'élément (30) présent du côté opposé sont plus durs que le matériau environnant de l'élément de support et de raccordement (2, 3, 10, 11) respectif, en particulier de sorte que les deux pièces (29, 30) ont presque la même dureté, tandis que l'élément glissant (27) présente également une dureté différente de celle du matériau environnant de l'élément de support et de raccordement (2, 3, 10, 11).

8. Agencement de palier à roulement (1, 26, 36, 37, 31, 34) selon l'une des revendications précédentes, **caractérisé en ce que** le support de composantes de force agissant principalement radialement provoque un frottement par glissement dans la direction radiale des éléments de support ou de raccordement (2, 3, 10, 11) pouvant tourner l'un par rapport à l'autre, dans lequel, pour le support de composantes de force agissant principalement radialement, des éléments de support ou de raccordement intérieur et extérieur (2, 3, 10, 11) pouvant tourner l'un par rapport à l'autre se touchent de préférence au moins temporairement, en créant des moments de frottement dynamique, l'étendue radiale de la fente (4) étant réduite au moins temporairement à la valeur zéro, en particulier dans les zones où se produit un frottement par glissement dynamique.

9. Agencement de palier à roulement (1, 26, 36, 37, 31, 34) selon l'une des revendications précédentes, **caractérisé en ce que** des éléments de support ou de raccordement (2, 3, 10, 11) en contact l'un avec l'autre sont mis en frottement au moins temporairement avec des éléments en laiton et des éléments en acier de palier à roulement et/ou en matière plastique et en acier de palier à roulement disposés dans l'agencement de palier à roulement (1, 26, 36, 37, 31, 34).

10. Agencement de palier à roulement (1, 26, 36, 37, 31, 34) selon l'une des revendications précédentes, **caractérisé en ce que**, en particulier pour le support des composantes de force agissant principalement radialement, des inserts ou des éléments glissants (27, 33) ou des anneaux (38, 39) ou des segments d'anneau glissant (35) en laiton, en acier ou en matière plastique ou dans un matériau ayant des propriétés de fonctionnement de secours sont introduits dans l'agencement de palier à roulement (1, 26, 36, 37, 31, 34).

11. Agencement de palier à roulement (1, 26, 36, 37, 31, 34) selon l'une des revendications précédentes, **caractérisé en ce que** des inserts glissants ou des éléments glissants (27, 33) ou des anneaux glissants (38, 39) ou des segments d'anneau glissant (35) sont recouverts ou revêtus d'une couche de matériau qui modifie le frottement par glissement, en particulier qui contrarie le frottement par glissement, en alternative qui augmente le frottement par glissement, dans lequel, de préférence, une couche de matériau qui modifie le frottement par glissement est appliquée en alternative sur au moins l'un des éléments de support ou de raccordement (2, 3, 10, 11) qui peuvent tourner l'un par rapport à l'autre, en particulier sous la forme d'un revêtement.

12. Agencement de roulement (1, 26, 36, 37, 31, 34) selon l'une des revendications précédentes, **caractérisé en ce qu'**au moins un palier radial est réalisé sous la forme de segments ou d'anneaux à une ou plusieurs rangées en matière plastique, en alternative en matière plastique renforcée de fibres, de préférence sous la forme d'une bande de cage ou de plusieurs bandes de cage, qui reçoivent chacune des corps en métal non ferreux, en graphite, en acier ou en céramique incorporés dans le segment ou l'anneau.
